(19) Europäisches Patentamt
European Patent Office
Office européen des brevets

(11) Publication number: 0 211 065 B1

(12) # EUROPEAN PATENT SPECIFICATION

(45) Date of publication of patent specification: 18.07.90

(51) Int. Cl.⁵: E 21 B 43/00, C 23 F 11/16, C 09 K 7/02

(21) Application number: 86901204.7

(22) Date of filing: 28.01.86

(86) International application number: PCT/US86/00174

(87) International publication number: WO 86/04634 14.08.86 Gazette 86/18

(54) **CORROSION INHIBITOR FOR HIGH DENSITY BRINES.**

(30) Priority: 04.02.85 US 698497

(43) Date of publication of application: 25.02.87 Bulletin 87/09

(45) Publication of the grant of the patent: 18.07.90 Bulletin 90/29

(84) Designated Contracting States: IT

(56) References cited:
GB-A-2 027 686
GB-A-2 121 397
US-A-3 133 028
US-A-4 102 804

(73) Proprietor: THE DOW CHEMICAL COMPANY
2030 Dow Center Abbott Road P.O. Box 1967
Midland Michigan 48640-1967 (US)

(72) Inventor: DOTY, Peter, A.
1977 Poseyville Road
Midland, MI 48640 (US)
Inventor: LARSON, William, A.
1409 Corrinne Street
Midland, MI 48640 (US)

(74) Representative: Smulders, Theodorus A.H.J., Ir. et al
Vereenigde Octrooibureaux Nieuwe Parklaan 107
NL-2587 BP 's-Gravenhage (NL)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to corrosion inhibiting compositions and more particularly to corrosion inhibitors useful in high density brines.

Solids-free, high density brines, for example, those referred to as "clear brine fluids", are known to be suitable for use as well drilling, completion, packer or workover fluids in oil and gas operations. The high density fluids, i.e., those fluids having a density in excess of 1797 kg/m$^3$ (5 pounds per US gallon (ppg)), typically, are used in wells requiring higher hydrostatic heads such as in high-pressure wells. The high density brines generally are produced by adding a zinc salt such as zinc bromide to a brine. These zinc-containing brines have the disadvantage of being more corrosive than brines which are substantially free of zinc salts. The use of these zinc-containing brines in oil field applications, therefore, is limited by their corrosiveness on well-servicing equipment especially at higher temperatures typically found in the deeper wells in which high density brines are used.

Heretofore, various corrosion inhibitors have been developed for admixing with brines to reduce the corrosion rates of the brines during their use in well operations. The corrosion inhibitors, however, have been unsatisfactory in providing corrosion inhibition protection for brines over the complete temperature range associated with the well in which the brines are used. Temperatures found in a wellbore can range from 37.8°C (100°F) near the surface of the bore up to 260°C (500°F) near the bottom of the bore with increasing temperatures from the surface to the bottom.

Among the corrosion inhibitors known in the prior art are thiocyanate and thiourea compounds. For example, British Patent 2,027,686 discloses the use of a thiocyanate or a thiourea, alone, or in combination with a quaternary pyridium, quinolinium, or isoquinolinium salt, as a corrosion inhibitor for aqueous solutions of alkali metal halides such as calcium chloride, calcium bromide, or calcium iodide, zinc chloride, zinc bromide, or zinc iodide or a mixture of such salts. Thiocyanate and thiourea compounds used alone are advantageously used as inhibitors in well operations at temperatures from 37.8°C to 149°C (100°F to 300°F) but are unsatisfactory for corrosion inhibition above 300°F in certain zinc-containing brines, especially those brines having a density above 2037 kg/m$^3$ (17 ppg).

Thioglycolate compounds are also known as inhibitors. For example, British Patent 2,121,397 discloses the use of a thioglycolate, alone, as a corrosion inhibitor for a solution of zinc bromide and calcum bromide in water. Thioglycolate compounds used alone are useful as corrosion inhibitors for well operations in a specific temperature range, i.e., in a temperature range from 149°C to 204°C (300°F to 400°F). However, unlike thiocyanate compounds or any other known commercially available corrosion inhibitor, thioglycolate compounds actually accelerate corrosion in brines at lower temperatures such as 37.8°C to 65.6°C (100 to 150°F). Since inhibitors, when used under field conditions, must protect over a broad temperature range, the corrosive nature of thioglycolate compounds limits their usefulness when used alone. For example, in a packer fluid application, even if the wellbore bottom temperature is above 149°C (300°F), the fluid in the upper portion of the wellbore is always cooler, such as 37.8°C to 93.3°C (100 to 200°F) near the surface. Thus, thioglycolate compounds when used alone can accelerate corrosion of well equipment such as oil field casing and tubing in the upper sections of the wellbore where temperatures are below about 121°C (250°F). Furthermore, in some instances thioglycolate inhibitors can lose effectiveness as the zinc ion concentration of a zinc-containing brine decreases.

Therefore, despite the advantages of using the thiocyanate, thiourea or thioglycolate compounds as corrosion inhibitors, separately and alone, these compounds when used alone do not provide satisfactory corrosion inhibition to high density brines over a wide range of densities and temperatures associated with well drilling, completion, packer and workover operations.

The present invention particularly resides in a corrosion inhibiting composition comprising a thioglycolate compound and at least one compound selected from a thiocyanate, a thiourea, and mixtures thereof.

The present invention also resides in a composition comprising water, a zinc halide and a corrosion inhibitor comprising a thioglycolate compound and at least one compound selected from a thiocyanate compound, a thiourea compound, and mixtures thereof.

The present invention further resides in a method of inhibiting corrosion of metals comprising the steps of contacting the metal at a temperature ranging from 37.8°C to 260°C (100°F to 500°F) with a brine containing a zinc compound and corrosion inhibitor, said corrosion inhibitor comprising a thioglycolate compound and at least one member selected from a thiocyanate compound, a thiourea compound, and mixtures thereof.

Heretofore, thiocyanate, thiourea or thioglycolate compounds have been used, separatepy and alone, as corrosion inhibitors for brines used, for example, as well drilling, completion, packer or workover fluids in oil and gas operations. It has now been discovered that a novel corrosion inhibiting composition comprising a combination of a thioglycolate compound and at least one of a thiocyanate and a thiourea compound unexpectedly provides improved corrosion inhibiting properties to high density brines over a wide range of densities and temperatures compared to either compound alone. Other known commercially available corrosion inhibitors when blended with thioglycolate, for example, do not provide the same improved corrosion inhibiting properties as the combination of the thioglycolate with the thiocyanate and/or thiourea composition of the present invention as described below.

The composition of the present invention may comprise a compound of thiocyanate or thiourea and a compound of thioglycolate. Mixtures of the above compounds may also be used. The compounds of thiocyanate, suitable for use in the present invention, can be represented generally by the formula:

$$X—S—C{\equiv}N$$

wherein X is any inorganic or organic cation which provides the anion, $SCN^{-1}$, in the solution in which the compound is dissolved. For example, X can be an alkali metal such as Na or K, or an ammonium cation. Preferably, water-soluble thiocyanate compounds are used to provide the $SCN^{-1}$ in an aqueous solution.

Among the water-soluble thiocyanates are thiocyanic acid and the inorganic salts of thiocyanic acid, particularly the alkali metal or alkaline earth metal thiocyanates, namely, sodium, potassium, lithium, calcium and magnesium thiocyanates, as well as ammonium thiocyanate. Other water-soluble thiocyanate compounds which, in aqueous solution, ionize to produce thiocyanate ions can be utilized. Particularly preferred is ammonium thiocyanate. Mixtures of two or more of such thiocyanate compounds can, of course, be employed.

The organic thiocyanate compounds useful in the present invention may be, for example, alkyl thiocyanates such as methyl thiocyanate, octyl thiocyanate, or dodecyl thiocyanate. Mixtures of two or more of such organic thiocyanate compounds may be employed.

The thiourea compounds useful in the present invention may be, for example, of the type represented by the formula:

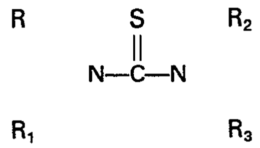

where R, $R_1$, $R_2$, and $R_3$ are each selected from hydrogen, and alkyl radicals containing from 1 to 4 carbon atoms such as methyl, ethyl, propyl, isopropyl, butyl and isobutyl.

Of the thiourea compounds, it is particularly preferred to utilize thiourea. Again, it will be understood that mixtures of two or more of said thiourea compounds can be employed, as well as mixtures of the thiocyanate and thiourea compounds.

The compounds of thioglycolates, including thioglycolic acid and salts thereof, suitable for use in the present invention can be represented generally by the formula:

$$HS—CH_2—COO—X$$

wherein X is any inorganic or organic cation which provides the thioglycolate anion in the solution in which the thioglycolate compound is dissolved. For example, X may be an alkali metal such as Na or K, ammonia or hydrogen. Preferably, the thioglycolate compounds employed are water-soluble compounds.

Among the water-soluble thioglycolates are thioglycolic acid and the inorganic salts of thioglycolic acid, particularly the alkali metal or alkaline earth metal thioglycolates, namely sodium, potassium, lithium, calcium and magnesium thioglycolates as well as ammonium thioglycolates. Other water-soluble thioglycolate compounds which in aqueous solution, ionize to produce thioglycolate ions can be utilized. Particularly preferred is ammonium thioglycolate. Mixtures of two or more of such thioglycolate compounds can, of course, be employed.

The organic thioglycolate compounds useful in the present invention may be, for example, methyl thioglycolate, ethanolamine thioglycolate, glycerol monothioglycolate, stearyl thioglycolate and isooctyl thioglycolate. Mixtures of two or more of such thioglycolate compounds may be employed.

Other known additives which will not affect the inhibiting effect of the corrosion inhibiting composition may be added to the corrosion inhibiting composition of the present invention. For example, in oil well applications, viscosifiers such as hydroxyethylcellulose; flocculants such as polyacrylamide; fluid loss agents such as calcium carbonate; pH control chemicals such as lime; and other drilling aids such as lubricants, oils, emulsifiers, and hydrogen sulfide scavengers may be added to the composition.

The corrosion inhibiting composition of the present invention, herein referred to as "corrosion inhibitor", comprises water, at least one metal halide and a corrosion inhibiting amount of a thiocyanate, a thiourea or mixtures thereof and a thioglycolate compound. In particular, the corrosion inhibitor may be used to inhibit the corrosion effects of aqueous brine solutions toward metals. The corrosion inhibiting composition of the present invention is particularly useful in well drilling, completion, workover, and packer fluids used in the oil and gas industry. However, the composition of the present invention can be used in other applications where brine is used in contact with metal to inhibit the corrosive properties of the brine toward the metal. Metals which typically come into contact with the composition include ferrous metals such as iron and steel and alloys of such metals, with steel bring the most common, as it is widely used in the oil and gas industry.

Generally, the brines of the present invention include those aqueous solutions containing a zinc compound such as zinc chloride, zinc bromide, and the like, and mixtures thereof. The brine solution of the

present invention may also include a mixture of the zinc compound and at least one other non-zinc compound, for example, a metal halide such as calcium chloride, calcium bromide, calcium iodide, magnesium chloride, magnesium bromide, magnesium iodide or mixtures thereof. Other alkali metal halides such as sodium chloride or potassium chloride and seawater in combination with a zinc compound may be useful in the present invention. Preferably, the zinc component is present in the form of, for example, zinc chloride, zinc bromide, zinc iodide, and mixtures thereof.

When used in combination with other metal halides such as calcium chloride, calcium bromide, magnesium chloride, magnesium bromide and mixtures thereof, the zinc metal halides increase the brine density prior to the brine's use as a well drilling, completion, packer or workover fluid. Various blends of the above salts provide a brine with a density above 1078 kg/m$^3$ (9 ppg).

The zinc-containing brines of the present invention may have a density of at least 1078 kg/m$^3$ (9 ppg). Preferably, the brines employed in the present invention have a density of from 1318 to 2756 kg/m$^3$ (11 to 23 ppg). More preferably, the brines have a density of from 1797 to 2397 kg/m$^3$ (15 to 20 ppg).

Preferably, the high density brines employed in the present invention comprise a substantially solids-free aqueous solution of halides of zinc and calcium such as zinc bromide, zinc chloride, calcium bromide, and calcium chloride. The amounts of zinc and calcium halides dissolved in the aqueous solution can vary depending upon the final density desired. The aqueous zinc and calcium halide solutions of the present invention may be formulated by various techniques known in the art to obtain the desired density. For example, U.S. Patent No. 4,304,677 and U.S. Patent No. 4,292,183 describe methods of obtaining a zinc bromide-calcium bromide solution. As an illustration of the present invention and not to be limited thereby, a zinc bromide and calcium bromide brine may be used in the present invention wherein the zinc bromide and calcium bromide are present in the solution in sufficient amounts to produce a brine having a density of from 1797 to 2397 kg/m$^3$ (15 to 20 ppg). For example, a zinc bromide-calcium bromide brine, having a density of 2301 kg/m$^3$ (19.2 ppg), may contain about 55 percent by weight zinc bromide, 20 percent by weight calcium bromide, and the remainder comprising water.

In preparing the corrosion inhibited brine composition of the present invention, the thiocyanate, the thiourea or mixtures thereof, and thioglycolate compounds may be dissolved directly in the high density brines. Alternatively, the compounds may be dissolved in separate solvents, such as water, and then added to the high density brine. In yet another alternative the compounds may be dissolved together in one solvent, such as water, and then added to the high density brine. The inhibited brine is then ready for downhole use.

A sufficient amount of inhibitor, is added to the brine to reduce corrosion of metal in contact with the brine from that which would occur with uninhibited brine of the same composition. The quantity of inhibitor added may depend on the application conditions and the degree of corrosion protection desired.

Generally, the concentration of the thiocyanate compound, the thiourea compound or mixtures thereof present in the brine may be from 0.01 to 1.0 percent by weight. Preferably, the concentration is in the range of from 0.05 to 0.5 percent by weight. The concentration of the thioglycolate compound present in the brine may be from 0.1 to 5.0 percent by weight and preferably from 0.1 to 2.0 percent by weight. More preferably, a concentration of from 0.2 to 0.8 percent by weight is used.

The ratio of the thioglycolate compound to the thiocyanate and/or thiourea compound is from 1:10 to 500:1. Preferably, the ratio is from 1:5 to 40:1. Most preferably from 1:2 to 15:1.

The inhibited brine composition of the present invention may be used at various temperatures and pressures, for example, as commonly employed in well operations in the oil and gas industry, to reduce corrosion of metal in contact with the brine. Typically, in oil and gas well operations, the temperature of the brine in use ranges from 37.8°C to 260°C (100°F to 500°F). The compositions of the present invention are effective at these temperatures and are especially effective at temperatures ranging from 65.6°C to 204°C (150°F to 400°F).

Neither the thiocyanate or thiourea alone nor the thioglycolate alone is satisfactory over the complete temperature range mentioned hereinabove, but the combination of thiocyanate and/or thiourea with thioglycolate provides improved corrosion protection over the entire temperature range of from 37.8°C to 260°C (100°F to 500°F).

The following general corrosion test procedure is used to demonstrate experimentally the effectiveness of the corrosion inhibitor of the present invention.

A series of test solutions of uninhibited brine is vigorously mixed at 23.9°C±2.8°C (75°F±5°F) with a corrosion inhibitor.

Coupons of N-80 steel are prepared by sonicating in acetone (coupons are stored with an oil coating) and then rinsing with clean acetone. The coupons are dried and then weighed.

The corrosion tests on the coupons are carried out in a stainless steel aging cell, lined with a quartz container, using the various test solutions. The coupons are placed in each of the solutions. With the test solution and coupons in place, the cell is sealed and nitrogen ($N_2$) padded with 10.36 bar (150 pounds per square inch gauge psig) $N_2$ pressure.

The aging cell is heated to a test temperature which constitutes the start of the test. After the aging cell is heated for a test period, the heater is turned off and the aging cell is allowed to cool to from 26.7°C to 37.8°C (80° to 100°F). The aging cell is then vented and opened. The coupons are transferred to inhibited 10 percent hydrochloric acid solution and cleaned ultrasonically for about two minutes. The coupons are then

rinsed with water and then rinsed again with acetone. The coupons are weighed after drying. The rate of corrosion of each sample is calculated using the following equation:

$$\text{Corrosion rate in microns per year-}\mu\text{py (mils/year-mpy)}=\frac{A\times\text{Weight loss (g)}}{\text{Test length (days)}}$$

where A is a constant for a given coupon surface area. The percent protection is calculated using the following equation:

$$\%\ \text{Protection}=\frac{(CB-CTC)\times 100}{CB}$$

where CB=corrosion rate or blanks and CTC=corrosion rate of test coupons.

The examples which follow are given to illustrate the invention and should not be construed as limiting its scope. All parts and percentages are by weight unless otherwise indicated.

Example 1

The general procedure for corrosion testing coupons above was used to corrosion test N-80 steel coupons with dimensions of 3.97 cm×2.54 cm×0.476 cm (1-9/16 inch×1 inch×3/16 inch) with a 0.635 cm (1/4 inch) hole and an exposed surface area of about 25.8 $cm^2$ (4 $in^2$). The test solutions used were a series of 150 milliliters (ml) solutions of zinc bromide and calcium bromide mixture having a density of 2301 kg/$m^3$ (19.2 ppg) (approximately 55% $ZnBr_2$, 20% $CaBr_2$ and 25% water). The solution was heated to a temperature of 65.6°C (150°F) for seven days. The corrosion inhibitors used and their respective amounts are described in Table I, columns (a) and (b) below. As shown in column (c), the inhibitor combination of ammonium thioglycolate and ammonium thiocyanate gives a lower corrosion rate than an uninhibited brine and brine inhibited with ammonium thioglycolate alone. In fact, the ammonium thioglycolate alone actually increases the corrosivity of the brine. The rate of corrosion of each sample was calculated using the following equation:

$$\text{Corrosion rate in microns per year-}\mu\text{py (mils/year-mpy)}=\frac{709\times\text{Weight loss (g)}}{\text{Test length (days)}}$$

TABLE I

| Sample | (a) Inhibitor | (b) Concentration (wt.%) | (c) Corrosion rate mpy (µpy) | % Protection |
|---|---|---|---|---|
| Comparative Sample A | None | | 24.3 (617) | — |
| Comparative Sample B | Ammonium thioglycolate | 1.0 | 44.9 (1140) | 0[1] |
| Sample 1 | Ammonium thioglycolate and mmoium thiocyanate | 1.0/0.1 | 9.9 (251) | 59.2 |

[1]Accelerates corrosion of base brine.

Example 2

The general corrosion test procedure above was used to corrosion test N-80 steel coupons having a dimension of 0.476 cm×2.54 cm×0.159 cm (3/16 inch×1 inch×1/16 inch) and an exposed surface area of about 3.23 $cm^2$ (0.5 $in^2$). The test solutions used were a series of 15 ml test solutions of a zinc bromide and calcium bromide brine mixture (approximately 39.8 percent $ZnBr_2$, 29.1 percent $CaBr_2$ and 31.1 percent water) having a density of 2097 kg/$m^3$ (17.5 ppg) mixed with a corrosion inhibitor in amounts as described in Table II, columns (a) and (b) below. The aging cell was heated to a temperature of 121.1°C (250°F) for 7 days. As shown in column (c), the inhibitor combination of ammonium thioglycolate and ammonium

thiocyanate gives a lower corrosion rate than an uninhibited brine and brine inhibited with ammonium thioglycolate alone. The rate of corrosion of each sample was calculated using the following equation:

$$\text{Corrosion rate in microns per year-µpy (mils/year-mpy)} = \frac{5672 \times \text{Weight loss (g)}}{\text{Test length (days)}}$$

TABLE II

| Sample | (a) Inhibitor | (b) Concentration (wt.%) | (c) Corrosion rate-mpy (µpy) | % Protection |
|---|---|---|---|---|
| Comparative Sample A | None | — | 12.2 (310) | — |
| Comparative Sample B | Ammonium thioglycolate | 1.0 | 12.5 (317) | 0 |
| Sample 1 | Ammonium thioglycolate and ammonium thiocyanate | 1.0/0.1 | 3.2 (81) | 73.8 |

Example 3

The general procedure above was used to corrosion test N-80 steel coupons with the same dimensions as in Example 2. The test solutions used with a series of 15 ml test solutions of a zinc bromide and calcium bromide brine (approximately 55% $ZnBr_2$, 20% $CaBr_2$ and 25% water) having a density of 2301 kg/m$^3$ (19.2 ppg) mixed with a corrosion inhibitor in amounts described in Table III, columns (a) and (b) below. The solutions were heated in the aging cell to a temperature of 204°C (400°F) for seven days.

As shown in column (c), the inhibitor combination of ammonium thioglycolate and ammonium thiocyanate gives a lower corrosion rate than ammonium thiocyanate alone. Additionally, the combination prevents pitting under these test conditions while ammonium thiocyanate alone does not. In addition, the ammonium thioglycolate and ammonium thiocyanate combination at elevated temperature provides improved corrosion protection over a commercially available amine film-forming inhibitor "KI-86", a trade name of the Tretolite Company. The rate of corrosion of each sample was calculated using the following equation:

$$\text{Corrosion rate in mils/year-mpy} = \frac{5672 \times \text{Weight loss (g)}}{\text{Test length (days)}}$$

TABLE III

| Sample | (a) Inhibitor | (b) Concentration (wt.%) | (c) Corrosion rate mpy (µpy) | % Protection |
|---|---|---|---|---|
| Comparative Sample A | None | — | 202 (5131) | — |
| Comparative Sample B | KI-86[1] | 0.15 | 144 (3658) | 28.7 |
| Comparative Sample C | Ammonium thiocyanate | 0.1 | 181[2] (4597) | 10.4 |
| Sample 1 | Ammonium thioglycolate and ammonium thiocyanate | 1.0/0.1 | 80 (2032) | 60.4 |

[1]KI-86 is a film-forming amine inhibitor which is a member of a class of inhibitors which contain salts of acetylated polyamines, quaternized amines and organic quaternanes in solvents such as methanol, isopropanol and water. KI-86 is commercially available from the Tretolite Company, a division of Petrolite Corporation.

[2]Pitting occurred on this sample.

Example 4

The general procedure above was used to corrosion test N-80 steel coupons with dimensions as in Example 1. The test solutions used were a series of 150 ml solutions of 2301 kg/m³ (19.2 ppg) $ZnBr_2/CaBr_2$ as in Example 1. The aging cell was heated to a temperature of 176.7°C (350°F) for 10 days and 22½ hours. The corrosion inhibitors used and their respective amounts are described in Table IV, columns (a) and (b) below. As shown in Table IV, the inhibitor combination of ammonium thioglycolate and thiourea has a higher corrosion rate than the inhibitor combination of ammonium thioglycolate and ammonium thiocyanate, however, the combination of ammonium thioglycolate and thiourea performs well as a corrosion inhibitor under the above described conditions. The rate of corrosion of each sample was calculated using the following equation:

$$\text{Corrosion rate in microns per year-µpy (mils/year-mpy)} = \frac{709 \times \text{Weight loss (g)}}{\text{Test length (days)}}$$

TABLE IV

| Sample | (a) Inhibitor | (b) Concentration (wt.%) | (c) Corrosion rate-mpy (µpy) |
|---|---|---|---|
| Sample 1 | Ammonium thioglycolate and ammonium thiocyanate | 1.0/0.075 | 34.1 (866) |
| Sample 2 | Ammonium thioglycolate and thiourea | 1.0/0.075 | 50.6 (1285) |

Example 5

The general procedure above was used to corrosion test N-80 steel coupons with dimensions as in Example 2. The test solutions used were a series of 15 ml solutions of 2301 kg/m³ (19.2 ppg) $ZnBr_2/CaBr_2$ as in Example 1. The aging cell was heated to a temperature of 149°C (300°F) for 7 days. The corrosion inhibitors used and their respective amounts are described in Table V, columns (a) and (b) below. As shown in column (c), the inhibitor combination of ammonium thioglycolate and ammonium thiocyanate gives a lower corrosion rate than either compound alone at a relatively higher temperature. The rate of corrosion of each sample was calculated using the following equation:

$$\text{Corrosion rate in microns per year-µpy (mils/year-mpy)} = \frac{5672 \times \text{Weight loss (g)}}{\text{Test length (days)}}$$

TABLE V

| Sample | (a) Inhibitor | (b) Concentration (wt.%) | (c) Corrosion rate mpy (µpy) | % Protection |
|---|---|---|---|---|
| Comparative Sample A | None | — | 253 (6426) | — |
| Comparative Sample B | KI-86[1] | 0.1 | 224 (5690) | 11.5 |
| Comparative Sample C | Ammonium thiocyanate | 0.1 | 131[2] (3327) | 48.2 |
| Comparative Sample D | Ammonium thioglycolate | 0.8 | 35 (889) | 86.2 |
| Sample 1 | Ammonium thiocyanate and ammonium thioglycolate | 0.1/0.8 | 31 (787) | 87.7 |

[1]KI-86 is a film-forming amine inhibitor which is a member of a class of inhibitors which contain salts of acetylated polyamines, quaternized amines and organic quaternanes in solvents such as methanol, isopropanol and water. KI-86 is commercially available from the Tretolite Company, a division of Petrolite Corporation.
[2]Pitting occurred on this sample.

Example 6

The corrosion rate of 1020 carbon steel coupon having a surface area of 11.6 $cm^2$ (1.8 $in^2$) in a 2301 kg/$m^3$ (19.2 ppg) zinc bromide and calcium bromide solution, Comparative Sample A described in Table VI hereinafter, was determined by a standard electrical resistance corrosion probe procedure known to those skilled in the art. The remaining samples described in Table VI were corrosion tested by the following procedure: Test coupons of 1020 carbon steel having a surface area of approximately 11.6 cm (1.8 $in^2$) were corrosion tested in a series of test solutions of a zinc bromide and calcium bromide brine mixture having a density of 2301 kg/$m^3$ (19.2 ppg). The coupons were first washed with a detergent, then rinsed with distilled water and then rinsed with acetone. The coupons were then dried and weighed to the nearest 0.1 milligram (mg).

An amount of 230 to 240 ml of 2301 kg/$m^3$ (19.2 ppg) zinc bromide/calcium bromide solution was placed in a three-neck 250 ml round bottomed flask equipped with thermometer, heating mantle, and stir bar. An amount of inhibitor was measured out and added to the flask and stirred until the inhibitor was dissolved or uniformly suspended in the solution. The corrosion inhibitors used and their respective amounts are described in Table VI, columns (a) and (b) below.

The coupons were suspended in the solutions from a glass hook mounted on a stopper. The stirrer and heater were then started. The flask and its contents were vacuum degassed and padded with nitrogen. The flask was heated to a temperature of 121°C (250°F). After a test period of two days had elapsed, the coupons were removed from the flask and cleaned ultrasonically, first in water, then in acetone. The coupons were then dried and weighed to the nearest 0.1 mg. The following equation was used to calculate the rate of corrosion of each sample coupon:

$$\text{Corrosion rate in microns per year-µpy (mils per year-mpy)} = \frac{2833 \times \text{Weight loss (g)}}{\text{Area (in}^2\text{)} \times \text{Test length (days)}}$$

The results of the corrosion tests are described in Table VI below.

As shown in Table VI, column (c), the combination of ammonium thioglycolate, ammonium thiocyanate and a commercially known inhibitor, such as KI-86, provides greater corrosion protection to a metal coupon than ammonium thioglycolate, alone, or the combination of ammonium thioglycolate and KI-86. Furthermore, although KI-86, alone, has a lower corrosion rate than the combination of KI-86, ammonium thioglycolate and ammonium thiocyanate at 121°C (250°F), there is a clear advantage in corrosion protection using a thioglycolate and thiocyanate combination over KI-86, alone, at higher temperatures than 121°C (250°F) as shown in Table V of Example 5.

TABLE VI

| Sample | (a) Inhibitor | (b) Concentration (wt.%) | (c) Corrosion rate-mpy (μpy) | (d) % Protection |
|---|---|---|---|---|
| Comparative Sample A | None | — | 86[1] (2184) | — |
| Comparative Sample B | Ammonium thioglycolate | 1.1 | 93 (2362) | 0[2] |
| Comparative Sample C | Ammonium thioglycolate and KI-86[3] | 1.1/ 0.08 | 95 (2413) | 0[2] |
| Comparative Sample D | KI-86[3] | 0.08 | 8 (203) | 90.7 |
| Comparative Sample E | Ammonium thioglycolate and triphenyl propargyl phosphonium bromide | 1.1/ 0.1 | 175 (4445) | 0[2] |
| Sample 1 | Ammonium thioglycolate and ammonium thiocyanate and KI-86 | 1.1/ 0.1/ 0.08 | 16 (406) | 81.4 |

[1]Determined by electrical resistance corrosion probe.
[2]Accelerates corrosion of base brine.
[2]KI-86 is a film-forming amine inhibitor which is a member of a class of inhibitors which contain salts of acetylated polyamines, quaternized amines and organic quaternanes in solvents such as methanol, isopropanol and water. KI-86 is commercially available from the Tretolite Company, a division of Petrolite Corporation.

## Claims

1. A corrosion inhibiting composition comprising a thioglycolate compound and at least one compound selected from a thiocyanate, a thiourea, and mixtures thereof.

2. The composition of Claim 1 wherein the thiocyanate compound is ammonium thiocyanate.

3. The composition of Claim 1 or 2 wherein the thiourea compound is thiourea.

4. The composition of Claim 1, 2 or 3 wherein the thioglycolate is ammonium thioglycolate.

5. The composition of any one of the preceding claims, wherein the ratio of the thioglycolate compound to the thiocyanate and/or the thiourea compounds is from 1:10 to 500:1.

6. The composition of Claim 5, wherein the ratio of the thioglycolate compound to the thiocyanate and/or the thiourea compounds is from 1:2 to 15:1.

7. A composition comprising water, a zinc halide and a corrosion inhibitor comprising a thioglycolate compound and at least one compound selected from a thiocyanate compound, a thiourea compound, and mixtures thereof.

8. The composition of Claim 7 wherein the zinc halide is selected from zinc chloride, zinc bromide, zinc iodide, and mixtures thereof.

9. The composition of Claim 7 or 8, including a metal halide selected from calcium chloride, calcium bromide, calcium iodide, magnesium chloride, magnesium bromide, magnesium iodide and mixtures thereof.

10. The composition of Claim 9 wherein the zinc halide is zinc bromide and the metal halide is calcium bromide.

11. The composition of any one of Claims 7 to 10 wherein the thioglycolate compound is an alkali metal salt of thioglycolic acid.

12. The composition of Claim 11 wherein the thioglycolate compound is ammonium thioglycolate.

13. The composition of any one of Claims 7 to 12 wherein the thiocyanate compound is an alkali metal salt of thiocyanic acid.

14. The composition of Claim 13 wherein the thiocyanate is ammonium thiocyanate.

15. The composition of any one of Claims 7 to 14 wherein thioglycolate is present in an amount of from 0.1 to 5.0 percent by weight and the compound selected from thiocyanate, thiourea and mixtures thereof is present in an amount of from 0.01 to 1.0 percent by weight.

16. The composition of any one of Claims 7 to 15 having a density in the range of from 1078 to 2756 kg/$m^3$ (9 to 23 pounds per US gallon).

17. A method of inhibiting corrosion of metals comprising the steps of contacting the metal at a temperature ranging from 37.8°C to 260°C (100°F to 500°F) with a brine containing a zinc compound and corrosion inhibitor, said corrosion inhibitor, comprising a thioglycolate compound and at least one member selected from a thiocyanate compound, a thiourea compound and mixtures thereof.

18. The method of Claim 17 wherein the zinc compound is selected from zinc chloride, zinc bromide, zinc iodide and mixtures thereof, said brine also including a metal halide selected from calcium chloride, calcium bromide, calcium iodide, magnesium chloride, magnesium bromide, magnesium iodide and mixtures thereof.

19. The method of Claim 18 wherein the zinc compound is zinc bromide and the metal halide is calcium bromide.

20. The method of Claim 17, 18 or 19 wherein the thioglycolate compound is present in the brine in an amount of from 0.1 to 5.0 percent by weight, and the compound selected from a thiocyanate compound, a thiourea compound, and mixtures thereof is present in the brine in an amount of from 0.01 to 1.0 percent by weight.

21. The method of any one of Claims 17 to 20, wherein the ratio of the thioglycolate compound to the thiocyanate and/or the thiourea compounds is from 1:10 to 500:1.

22. The method of Claim 21, wherein the ratio of the thioglycolate compound to the thiocyanate and/or the thiourea compounds is from 1:2 to 15:1.

23. The method of any one of Claims 17 to 22, wherein the brine has a density of from 1078 to 2756 kg/$m^3$ (9 to 23 pounds per US gallon).

**Patentansprüche**

1. Korrosionhemmendes Mittel, enthaltend eine Thioglycolatverbindung und mindestens eine aus Thiocyanat, Thioharnstoff und Gemischen davon gewählte Verbindung.

2. Mittel nach Anspruch 1, wobei die Thiocyanatverbindung Ammoniumthiocyanat ist.

3. Mittel nach Anspruch 1 oder 2, wobei die Thioharnstoffverbindung Thioharnstoff ist.

4. Mittel nach Anspruch 1, 2 oder 3, wobei das Thioglycolat Ammoniumthioglycolat ist.

5. Mittel nach einem der vorhergehenden Ansprüche, wobei das Verhältnis der Thioglycolatverbindung zu den Thiocyanat- und/oder Thioharnstoffverbindungen von 1:10 bis 500:1 ist.

6. Mittel nach Anspruch 5, wobei das Verhältnis der Thioglycolatverbindung zu den Thiocyanat- und/oder Thioharnstoffverbindungen von 1:2 bis 15:1 ist.

7. Mittel, enthaltend Wasser, ein Zinkhalogenid und einen Korrosionsinhibitor, enthaltend eine Thioglycolatverbindung und mindestens eine aus einer Thiocyanatverbindung, einer Thioharnstoffverbindung und Gemischen davon gewählte Verbindung.

8. Mittel nach Anspruch 7, wobei das Zinkhalogenid aus Zinkchlorid, Zinkbromid, Zinkjodid und Gemischen davon gewählt ist.

9. Mittel nach Anspruch 7 oder 8, enthaltend ein Metallhalogenid, das aus Calciumchlorid, Calciumbromid, Calciumjodid, Magnesiumchlorid, Magnesiumbromid, Magnesiumjodid und Gemischen davon gewählt ist.

10. Mittel nach Anspruch 9, wobei das Zinkhalogenid Zinkbromid und das Metallhalogenid Calciumbromid ist.

11. Mittel nach einem der Ansprüche 7 bis 10, wobei die Thioglycolatverbindung ein Alkalimetallsalz der Thioglycolsäure ist.

12. Mittel nach Anspruch 11, wobei die Thioglycolatverbindung Ammoniumthioglycolat ist.

13. Mittel nach einem der Ansprüche 7 bis 12, wobei die Thiocyanatverbindung ein Alkalimetallsalz der Thiocyansäure ist.

14. Mittel nach Anspruch 13, wobei das Thiocyanat Ammoniumthiocyanat ist.

15. Mittel nach einem der Ansprüche 7 bis 14, wobei Thioglycolat in einer Menge von 0,1 bis 5,0 Gew.% und die aus Thiocyanat, Thioharnstoff und Gemischen davon gewählte Verbindung in einer Menge von 0,01 bis 1,0 Gew.% vorhanden ist.

16. Mittel nach einem der Ansprüche 7 bis 15, mit einer Dichte von 1078 bis 2756 kg/$m^3$.

17. Verfahren zur Hemmung der Korrosion von Metallen, wobei das Metall bei einer Temperatur von 37,8°C bis 260°C mit einer eine Zinkverbindung und einen Korrosionsinhibitor enthaltenden Salzlösung in Kontakt gebracht wird, welcher Korrosionsinhibitor eine Thioglycolatverbindung und mindestens eine aus einer Thiocyanatverbindung, einer Thioharnstoffverbindung und Gemischen davon gewählte Verbindung enthält.

18. Verfahren nach Anspruch 17, wobei die Zinkverbindung aus Zinkchlorid, Zinkbromid, Zinkjodid und Gemischen davon gewählt ist, welche Salzlösung auch ein aus Calciumchlorid, Calciumbromid,

Calciumjodid, Magnesiumchlorid, Magnesiumbromid, Magnesiumjodid und Gemischen davon gewählte Verbindung enthält.

19. Verfahren nach Anspruch 18, wobei die Zinkverbindung Zinkbromid und das Metallhalogenid Calciumbromid ist.

20. Verfahren nach Anspruch 17, 18 oder 19, wobei die Thioglycolatverbindung in einer Menge von 0,1 bis 5,0 Gew.% in der Salzlösung und die aus einer Thiocyanatverbindung, einer Thioharnstoffverbindung und Gemischen davon gewählte Verbindung in einer Menge von 0,01 bis 1,0 Gew.% in der Salzlösung vorhanden ist.

21. Verfahren nach einem der Ansprüche 17 bis 20, wobei das Verhältnis der Thioglycolatverbindung zu den Thiocyanat- und/oder Thioharnstoffverbindungen von 1:10 bsi 500:1 ist.

22. Verfahren nach Anspruch 21, wobei das Verhältnis der Thioglycolatverbindung zu den Thiocyanat- und/oder Thioharnstoffverbindungen von 1:2 bis 15:1 ist.

23. Verfahren nach einem der Ansprüche 17 bis 22, wobei die Salzlösung eine Dichte von 1078 bis 2756 kg/m$^3$ hat.

**Revendications**

1. Composition pour inhiber la corrosion, comprenant un composé thioglycolate et au moins un composé choisi parmi un thiocyanate, une thiourée, et leurs mélanges.

2. Composition de la revendication 1, dans laquelle le composé thiocyanate est le thiocyanate d'ammonium.

3. Composition de la revendication 1 ou 2, dans laquelle le composé thiourée est la thiourée.

4. Composition de la revendication 1, 2 ou 3, dans laquelle le thioglycolate est le thioglycolate d'ammonium.

5. Composition de l'une quelconque des revendications précédentes, dans laquelle le rapport du composé thioglycolate aux composés thiocyanate et/ou thiourée vaut 1:10 à 500:1.

6. Composition de la revendication 5, dans laquelle le rapport du composé thioglycolate aux composés thiocyanate et/ou thiourée vaut 1:2 à 15:1.

7. Composition comprenant de l'eau, un halogénure de zinc et un inhibiteur de corrosion, comprenant un composé thioglycolate et au moins un composé choisi parmi un composé thiocyanate, un composé thiourée et leurs mélanges.

8. Composition de la revendication 7, dans laquelle l'halogénure de zinc est choisi parmi le chlorure de zinc, le bromure de zinc, l'iodure de zinc et leurs mélanges.

9. Composition de la revendication 7 ou 8, comprenant un halogénure métallique choisi parmi le chlorure de calcium, le bromure de calcium, l'iodure de calcium, le chlorure de magnésium, le bromure de magnésium, l'iodure de magnésium et leurs mélanges.

10. Composition de la revendication 9, dans laquelle l'halogénure de zinc est le bromure de zinc et l'halogénure métallique est le bromure de calcium.

11. Composition de l'une quelconque des revendications 7 à 10, dans laquelle le composé thioglycolate est un sel de métal alcalin de l'acide thioglycolique.

12. Composition de la revendication 11, dans laquelle le composé thioglycolate est le thioglycolate d'ammonium.

13. Composition de l'une quelconque des revendications 7 à 12, dans laquelle le composé thiocyanate est un sel de métal alcalin de l'acide thiocyanique.

14. Composition de la revendication 13, dans laquelle le thiocyanate est le thiocyanate d'ammonium.

15. Composition de l'une quelconque des revendications 7 à 14, dans laquelle le thioglycolate est présent en une proportion de 0,1 à 5,0% en poids et le composé choisi parmi les thiocyanates, les thiourées et leurs mélanges est présent en une proportion de 0,01 à 1,0% en poids.

16. Composition de l'une quelconque des revendications 7 à 15, présentant une masse volumique située dans la gamme allant de 1078 à 2756 kg/m$^3$ (9 à 23 livres par gallon US).

17. Procédé pour inhiber la corrosion de métaux, comprenant les étapes consistant à mettre en contact le métal, à une température située entre 37,8°C et 260°C (100°F à 500°F), avec une saumure contenant un composé de zinc et un inhibiteur de corrosion, ledit inhibiteur de corrosion comprenant un composé thioglycolate et au moins un composé choisi parmi un composé thiocyanate, un composé thiourée et leurs mélanges.

18. Procédé de la revendication 17, dans lequel le composé du zinc est choisi parmi le chlorure de zinc, le bromure de zinc, l'iodure de zinc et leurs mélanges, ladite saumure contenant également un halogénure métallique choisi parmi le chlorure de calcium, le bromure de calcium, l'iodure de calcium, le chlorure de magnésium, le bromure de magnésium, l'iodure de magnésium et leurs mélanges.

19. Procédé de la revendication 18, dans lequel le composé du zinc est le bromure de zinc et l'halogénure métallique est le bromure de calcium.

20. Procédé de la revendication 17, 18 ou 19, dans lequel le composé thioglycolate est présent dans la saumure à raison de 0,1 à 5,0% en poids, et le composé choisi parmi un composé thiocyanate, un composé thiourée et leurs mélanges est présent dans la saumure à raison de 0,01 à 1,0% en poids.

21. Procédé de l'une quelconque des revendications 17 à 20, dans lequel le rapport du composé thioglycolate aux composés thiocyanate et/ou thiourée vaut de 1:10 à 500:1.

22. Procédé de la revendication 21, dans lequel le rapport du composé thioglycolate aux composés thiocyanates et/ou thiourée vaut 1:2 à 15:1.

23. Procédé de l'une quelconque des revendications 17 à 22, dans lequel la saumure présente une masse volumique de 1078 à 2756 $kg/m^3$ (9 à 23 livres par gallon US).